(19) 

Europäisches
Patentamt
European
Patent Office
Office européen
des brevets

(11)  **EP 4 458 603 A1**

(12)  **EUROPEAN PATENT APPLICATION**

(43) Date of publication:
    **06.11.2024 Bulletin 2024/45**

(51) International Patent Classification (IPC):
    **B60L 3/00** (2019.01)   **B60L 53/22** (2019.01)
    **B60L 53/57** (2019.01)   **B60L 55/00** (2019.01)

(21) Application number: **24173034.0**

(22) Date of filing: **29.04.2024**

(52) Cooperative Patent Classification (CPC):
    **B60L 3/0069; B60L 53/22; B60L 53/57;
    B60L 55/00**

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH MA MD TN**

(30) Priority: **05.05.2023  US 202363500424 P
               26.06.2023  US 202363510350 P
               23.04.2024  US 202418642907**

(71) Applicant: **Aptiv Technologies AG
    8200 Schaffhausen (CH)**

(72) Inventors:
    • **AGARWAL, Rachit
      Troy, MI, 48098 (US)**
    • **WANG, Yiqi
      Troy, MI, 48098 (US)**

(74) Representative: **Bardehle Pagenberg
    Partnerschaft mbB
    Patentanwälte Rechtsanwälte
    Prinzregentenplatz 7
    81675 München (DE)**

(54) **RESIDUAL CURRENT DETECTION FOR VEHICLE ONBOARD CHARGER USING ISOLATION RESISTANCE MONITORING CIRCUITRY**

(57)     A control system for controlling a vehicle charger including a power factor correction (PFC) circuit includes a resistance measuring circuit configured to make first resistance measurements at a positive DC terminal of the PFC circuit and second resistance measurements at a negative DC terminal of the PFC circuit. The control system includes a controller configured to, in response to the PFC circuit being in a selected switching state, compare one of the first resistance measurements to a positive threshold. The one of the first resistance measurements is made while the PFC circuit is in the selected switching state. The positive threshold is based on a first parallel combination of one or more resistances corresponding to the selected switching state of the PFC circuit. If the one of the first resistance measurements is less than the positive threshold, the controller disables operation of the vehicle charger.

FIG. 2

EP 4 458 603 A1

**Description**

CROSS-REFERENCE TO RELATED APPLICATIONS

This application claims the benefit of U.S. Provisional Application Nos. 63/500,424 filed May 5, 2023 and 63/510,350 filed June 26, 2023, the entire disclosures of which are incorporated by reference.

FIELD

The present disclosure relates to a vehicle charger and more particularly to monitoring the vehicle charger for undesirable residual current.

BACKGROUND

An electric vehicle (EV), such as a fully-electric or a hybrid vehicle, includes a vehicle charger to facilitate the transfer of energy. Some EVs include a bi-directional charger allowing for on-boarding and off-boarding of electrical energy to and from the vehicle. Bi-directional chargers may be operable in two charging modes: an on-boarding mode and an off-boarding mode. A processor interface coupled to the vehicle charger may enable a processor of the vehicle charger to communicate with other vehicle operating systems, external charging stations, or other power sources, for example, to determine a proper amount of current, power, and/or charging standard to apply when on-boarding or off-boarding power with the vehicle charger. The vehicle charger may convert AC power from external sources (e.g., residential outlets connected to a power grid) to DC power used to charge an EV battery pack (G2V mode). Additionally, DC power from a high-voltage battery pack may be converted to AC power and used to support AC loads (V2L mode), power grid management (V2G mode), or a combination of AC loads, power grid management, and/or other EVs and devices (V2X mode).

Vehicle chargers include mechanisms to ensure safe operation while transferring the energy. The safety mechanisms may include isolation resistance monitoring and residual current detection within the vehicle charger. Each of the safety mechanisms require a separate circuit with their own hardware. A residual current detector is often used to shut off power when residual current measured through the circuit exceeds safe operating limits for the vehicle charger. Residual current detectors may require dedicated hardware-including high-accuracy sensors, a transformer core, and a winding-to detect current leakage between the circuit and ground. An isolation resistance monitor may require separate dedicated hardware, including sensors, a transformer core, winding, and robust/high-power switches configured to shut off power supply through the vehicle charger when resistance through the circuit is detected to be dangerously low. Such safety mechanisms use circuit breakers to de-energize the vehicle charger to mitigate risks associated with an electrical failure. Dedicated hardware for both safety mechanisms can lead to an increase in price and vehicle weight.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

SUMMARY

A control system for controlling a vehicle charger having a power factor correction (PFC) circuit, the control system includes a resistance measuring circuit configured to make first resistance measurements at a positive DC terminal of the PFC circuit and second resistance measurements at a negative DC terminal of the PFC circuit. The control system includes a controller configured to, in response to the PFC circuit being in a selected switching state, compare one of the first resistance measurements to a positive threshold. The one of the first resistance measurements is made while the PFC circuit is in the selected switching state, and the positive threshold is based on a first parallel combination of one or more resistances corresponding to the selected switching state of the PFC circuit. The controller is configured to, in response to the one of the first resistance measurements being less than the positive threshold, disable operation of the vehicle charger.

In other features, the controller is configured to, in response to the PFC circuit being in the selected switching state compare one of the second resistance measurements to a negative threshold. The one of the second resistance measurements is made while the PFC circuit is in the selected switching state, and the negative threshold is based on a second parallel combination of one or more resistances corresponding to the selected switching state of the PFC circuit. The controller is configured to, in response to the one of the second resistance measurements being less than the negative threshold, disable operation of the vehicle charger.

In other features, the resistance measuring circuit is configured to make voltage measurements for the PFC circuit. The resistance measuring circuit is configured to calculate the first resistance measurements and the second resistance measurements based on the voltage measurements. In other features, the voltage measurements include first voltage measurements at the positive DC terminal and second voltage measurements at the negative DC terminal. The first resistance measurements are calculated based on the first voltage measurements and the second voltage measurements. The second resistance measurements are calculated based on the first voltage measurements and the second voltage measurements. In other features, the one of the first resistance measurement is calculated based on one of the first voltage measurements and one of the second voltage measurements. The one of the first voltage measurements and the one of the second voltage measurements are made while the PFC circuit is in the selected switching state.

In other features, the PFC circuit includes three branches corresponding one-to-one with three equivalent resistances, and the positive and negative thresholds are determined based on parallel combinations of the three equivalent resistances. In other features, the PFC circuit includes eight switching states, each switching state associated with a corresponding threshold for the positive DC terminal and a corresponding threshold for the negative DC terminal. In other features, the control system includes a datastore storing the corresponding thresholds for each of the eight switching states.

In other features, the resistance measuring circuit includes a first resistance measuring circuit configured to measure a first resistance at a first DC terminal of the PFC circuit. The resistance measuring circuit includes a second resistance measuring circuit configured to measure a second resistance at a second DC terminal of the PFC circuit. In other features, the first resistance measuring circuit includes a first resistor with a known first resistance, and a first switch that selectively connects the first resistor to the positive DC terminal. The second resistance measuring circuit includes a second resistor with a known second resistance, and a second switch that selectively connects the second resistor to the negative DC terminal.

In other features, the vehicle charger is a bi-directional charger configured to on-board energy from and off-board energy to an external energy storage. In other features, the resistance measuring circuit is configured to make the first resistance measurements and the second resistance measurements in response to the vehicle charger being in a charging mode. In other features, the positive threshold is a percentage of a first expected resistance that is calculated based on the first parallel combination of the one or more resistances corresponding to the selected switching state. In other features, the first resistance measurements are isolation resistances. In other features, the controller is configured to disable the operation of the vehicle charger by triggering a protection circuit to de-energize the vehicle charger.

A method for controlling a vehicle charger having a power factor correction (PFC) circuit, the method includes in response to the PFC circuit being in a selected switching state, making a first resistance measurement at a positive DC terminal of the PFC circuit and a second resistance measurement at a negative DC terminal of the PFC circuit. The first resistance measurement and the second resistance measurement are made while the PFC circuit is in the selected switching state. The method includes comparing the first resistance measurement to a positive threshold. The positive threshold is based on a first parallel combination of one or more resistances corresponding to the selected switching state of the PFC circuit. The method includes, in response to the first resistance measurement being less than the positive threshold, disabling operation of the vehicle charger.

In other features, the method includes comparing the second resistance measurement to a negative threshold. The negative threshold is based on a second parallel combination of one or more resistances corresponding to the selected switching state of the PFC circuit. The method includes, in response to the second resistance measurement being less than the negative threshold, disabling the operation of the vehicle charger. In other features, the PFC circuit includes three branches corresponding one-to-one with three equivalent resistances. The positive and negative thresholds are determined based on parallel combinations of the three equivalent resistances.

A non-transitory computer-readable medium includes instructions including in response to the PFC circuit being in a selected switching state, making a first resistance measurement at a positive DC terminal of the PFC circuit and a second resistance measurement at a negative DC terminal of the PFC circuit. The first resistance measurement and the second resistance measurement are made while the PFC circuit is in the selected switching state. The instructions include comparing the first resistance measurement to a positive threshold. The positive threshold is based on a first parallel combination of one or more resistances corresponding to the selected switching state of the PFC circuit. The instructions include, in response to the first resistance measurement being less than the positive threshold, disabling operation of the vehicle charger. In other features, the positive threshold is a percentage of a first expected resistance that is calculated based on the first parallel combination of the one or more resistances corresponding to the selected switching state.

Further areas of applicability of the present disclosure will become apparent from the detailed description, the claims, and the drawings. The detailed description and specific examples are intended for purposes of illustration only and are not intended to limit the scope of the disclosure.

BRIEF DESCRIPTION OF THE DRAWINGS

The present disclosure will become more fully understood from the detailed description and the accompanying drawings.

FIG. 1 is a block diagram illustrating an overview of an architecture for a vehicle charger controlled by a control system according to aspects of the present disclosure.

FIG. 2 is a block diagram of an example implementation of a charging circuit for monitoring operations of a vehicle charger according to aspects of the present disclosure.

FIG. 3 is a flowchart of an example method for monitoring and controlling a vehicle charger according to aspects of the present disclosure.

FIG. 4 is a flowchart of an example method for determining thresholds for controlling a vehicle charger according to aspects of the present disclosure.

In the drawings, reference numbers may be reused to identify similar and/or identical elements.

DETAILED DESCRIPTION

**OVERVIEW**

In an energy conversion system of a vehicle, locations of high current and/or voltage may be isolated from the rest of the vehicle, including from chassis ground, body ground, engine ground, etc. The amount of isolation may be determined as an effective resistance to ground and a high effective resistance to ground indicates sufficient isolation. Energy conversion systems may therefore have an isolation resistance monitoring (IRM) system that measures one or more isolation resistances and triggers remedial action if the isolation resistances are not sufficiently high. Remedial action may include operating the energy conversion system at a lower power or preventing operation altogether.

In various implementations, the IRM system may measure equivalent resistance to ground at positive and negative nodes of a DC link, which may be present between a power factor correction (PFC) circuit and a DC/DC voltage converter. These two equivalent resistances may be referred to as a positive isolation resistance and a negative isolation resistance. According to the present disclosure, the existing IRM system can be used to detect undesirable residual current in the PFC circuit or other circuitry of the energy conversion system. Using the IRM system to perform this residual current detection (RCD) saves the added cost of hardware for RCD.

To perform RCD, the IRM system is controlled to measure the positive and negative isolation resistances at specific times corresponding to known switching states of the PFC circuit. Each switching state of the PFC circuit corresponds to a parallel combination of equivalent resistances, so various RCD thresholds can be established for the parallel combination of equivalent resistances at each of the switching states of the PFC circuit. At each switching state of the PFC circuit, the positive and negative isolation resistances from the IRM system are compared to these RCD thresholds to determine whether there is excessive residual current (indicated by one of the positive or negative isolation resistances falling below a corresponding RCD threshold). If excessive residual current is detected, remedial action can be performed for the energy conversion system.

According to various embodiments of the present disclosure, an existing IRM system may be adapted to also perform RCD by revising code executed by one or more processors that control the IRM system, without requiring any new hardware or even any hardware changes.

**EXAMPLE ENVIRONMENT**

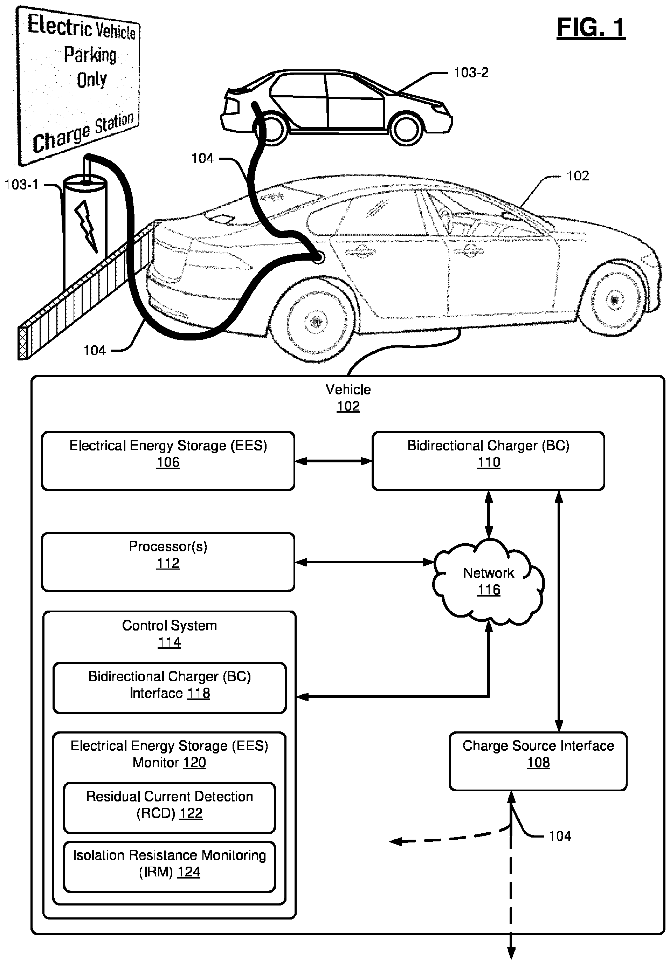

FIG. 1 shows an overview of an architecture for a vehicle charger controlled by a control system according to aspects of the present disclosure. The architecture includes a vehicle 102 at a charging location for on-boarding power to the vehicle 102 or off-boarding power from the vehicle 102 to an external energy storage. The charging location can be near a residence, or in a public or private parking facility. The external energy storage may be any energy storage device such as an external battery charger, power source, residential charging port, commercial charger, or another vehicle configured to transfer energy to and/or from other energy sources. The vehicle 102 may include a vehicle charger, such as a bi-directional charger (BC) 110, configured to off-board power to charge the external energy storage (such as power source 103-1 or a power source 103-2), or on-board power using energy obtained from the external energy storage. In some examples, the BC 110 may be a bi-directional charger that is configured to operate in two modes: an on-boarding mode where it can receive power from an external energy storage and an off-boarding mode where it can send power to charge an external energy storage. A control system 114 of the vehicle 102 may monitor and control the BC 110 while in a charging mode to prevent energy leakage and ensure safe charging operation.

An electrical connection 104 may be established between the vehicle 102 and the external energy storage, such as the power source 103-1 or the power source 103-2. The power source 103-1 and/or the power source 103-2 may be an external energy storage capable of transferring energy to and from the vehicle 102, such as but not limited to, a generic energy source, a fixed energy source, a power grid, a residential energy source, a commercial energy source, or another EV. The electrical connection 104 may enable energy transfers to and from the vehicle 102. Although FIG. 1 shows vehicle 102 connected to both the power source 103-1 and the power source 103-2, it is for illustration purposes only, and the vehicle 102 may be connected to just one at a time.

The vehicle 102 may include an electrical energy storage (EES) 106 operable to store power for operating the vehicle 102 and assist in performing energy transfer to and/or from the vehicle 102 during a charging mode. The EES 106 may be coupled to the BC 110. The BC 110 may be coupled to a charge source interface 108 configured to establish the electrical connection 104 between the vehicle 102 and the power source 103-1 or 103-2, to cause electrical energy to be transferred to or from the EES 106. The BC 110 is configured to control the charge source interface 108 and enable bi-directional charging operations in their respective charging modes. The charge source interface 108 may trigger BC 110 to perform specific tasks or to operate in a particular mode to satisfy demands on or off the vehicle 102 once connected to the power source 103-1 or the power source 103-2.

The EES 106 is an energy storage device of the vehicle 102. The EES 106 may be a battery, a battery system, or other suitable vehicle energy storage device operable to output electrical energy for satisfying demands of a vehicle electrical system, such as a hybrid or EV propulsion system, an airbag system, or a starter system. The EES 106 may be an energy storage device such as a battery, a fuel cell, an electrochemical cell, or combination of the foregoing, similar to those used in personal, commercial, and automotive applications. The EES 106 may include, for example, Zinc-Carbon, Alkaline, Lead Acid, Nickel Cadmium, Nickel-Zinc, Nickel Metal Hydride, and/or Lithium-Ion batteries. In some examples, the EES 106 may be a rechargeable Lithium-ion battery including a battery cell(s). As used herein, the terms "battery", "battery system", "energy storage system", and "EES" may be used interchangeably to refer to any battery, fuel cell, or battery cell technology, including various electrochemical cells and other energy storage devices, which are suitable for providing a connected energy resource or electrical energy to a load during discharge and/or suitable to accept and store electrical energy received when charging from an energy source.

The charge source interface 108 may link one or more branches of the power source 103-1 or 103-2 to a respective port on the BC 110. The BC 110 can be configured to control charging operations of the vehicle 102. The BC 110 can include a power factor correction (PFC) circuit configured to change between a plurality of switching states to facility energy transfers on a plurality of terminals of the BC 110, which connect the PFC circuit to the power source 103-1 or the power source 103-2.

The BC 110 may include a logic unit, such as a digital signal processor (DSP), which provides a processor interface to enable other vehicle processors, such as a processor(s) 112 and a control system 114, to monitor the BC 110. The processor interface (or DSP interface) of the BC 110 may be configured to output measurement data generated by the DSP and/or other data related to or generated by the BC 110 while the BC 110 is in a charging mode. The data output from the BC 110 may include information about the EES 106, voltage measurements related to the PFC circuit, charging information (such as charging mode or requirements related to the charge source interface 108) and/or other information relevant to vehicle status and operation of the BC 110.

The vehicle 102 may include the processor(s) 112 and the control system 114, each of which share a connection across a vehicle network 116 to the BC 110 and other vehicle systems within the vehicle 102, within other vehicles, and/or at remote locations from the vehicle 102, such as a remote operations facility. The network 116 provides the processor(s) 112 and/or the control system 114 with access to the processor interface of the BC 110. In an example, the network 116 may be a communication bus of the vehicle 102. In another example, the network 116 may be a local area network of the vehicle 102. In other examples, direct communication link(s), including wired and wireless links, within the vehicle 102 may be used to establish direct or indirect connections across the network 116 between the processor(s) 112, the control system 114, and/or the BC 110.

In some example, the processor(s) 112 may be separate from the BC 110 or be a microcontroller within the BC 110, which executes the instructions associated with the BC interface 118 to cause the BC 110 to operate in the bi-directional charging modes. The processor(s) 112 may be configured to monitor the energy transfers occurring through the BC 110 for leakage currents or unsafe isolation resistances based on measurements taken by the BC 110 at a plurality of its branches and/or terminals on either side of the BC 110.

The processor(s) 112 may receive and process measurement data received from the BC 110. The processor(s) 112 may trigger the BC 110 to provide measurement data including measured voltages at terminals of the BC 110 when the BC 110 is in a charging mode. The processor(s) 112 may also trigger the BC 110 to switch between various switching states and measure voltages at the terminals at each switching state. In some example, the processor(s) 112 may receive instructions from the control system 114 and/or components thereof to be sent to BC 110 for switching between the switching states of the PFC circuit. In some examples, the processor(s) may also receive instructions from the control system 114 and/or components thereof at timed intervals to perform measurements while the BC 110 is in charging mode and in one or more switching states. The control system 114 may include instructions for the processor(s) 112 to execute safety functions, including BC 110 monitoring, voltage measuring, and switching between PFC circuit switching states.

The control system 114 may include a BC interface 118 and an EES monitor 120, which enable safety functions associated with the BC 110. The BC interface 118 communicates with the BC 110 to enable dual functionality for both isolation resistance monitoring and residual current detection. Execution of instructions from the control system 114 may cause the processor(s) 112 to generate measurement data for the BC interface 118. The processor(s) 112 can include a processor that controls the BC 110 and/or the BC interface 118. In some examples, the processor(s) 112 may include a control circuit of the BC 110, or another hardware processing unit on the vehicle 102 that is used to execute the instructions of the EES monitor 120. The processor(s) 112 may include various combinations of one or more processing units operable to execute instructions on a vehicle to generate the measurement data for the BC interface 118.

The BC interface 118 may also be referred to as a processor interface. The processor(s) 112 is configured to retrieve the measured voltage for each terminal of the BC 110 from accessing measurement data maintained by the BC 110 during the energy transfers and report the foregoing to the BC interface 118. In some examples, the BC interface 118 may be configured to process the measured data and convert it to a format readable and processable by the EES monitor 120. The BC interface 118 may interface with the processor(s) 112 to exchange data, such as provide the monitoring instructions, receive measured data, and/or trigger power shut down.

An isolation resistance monitor (IRM) 124 of the EES monitor 120 may be configured to monitor measured voltages at terminals of the BC 110 received from the BC interface 118 to determine isolation resistances for the terminal. A residual current detector (RCD) 122 of the EES monitor 120 may be configured to receive calculated resistances from IRM 124 and determine whether an isolation resistance at a terminal is at an unsafe level, indicating that there is current leakage within BC 110. The IRM 124 may trigger the RCD 122 to determine safety of an ongoing charging operation of the BC 110 in response to detecting residual currents or unsafe isolation resistance within the BC 110, thereby providing dual functionality using a single apparatus and execution process. The RCD 122 may store pre-programmed thresholds for resistances at each terminal for each switching state of the PFC circuit. The RCD 122 may compare the calculated resistances with their respective thresholds to determine whether residual current at unsafe levels has occurred.

The processor(s) 112 may execute the EES monitor 120 to assist in safely controlling operations performed with the BC 110 or cease (stop) these operations when unsafe to continue. The RCD 122 may perform functions for monitoring the measured data for deviations from expected resistance data for the PFC circuit when the BC 110 is in charging mode. The RCD 122 may determine residual current within the PFC circuit based on the measured data deviating from the expected resistance data and trigger the processor(s) 112 to cause the BC circuit to stop energy transfer when the deviation is above a pre-programmed threshold indicating unsafe leakage currents in the BC 110.

The processor(s) 112 may trigger a circuit protection unit of the vehicle 102 or the BC 110 to shut off or disable energy transfer. The circuit protection unit may cease all energy transfer between the EES 106 and the power source 103-1 or the power source 103-2 through the charge source interface 108. The cessation of the energy transfer may thereby protect the vehicle 102, the power source 103-1 or the power source 103-2, any operators at or near the charging site, and components thereof from effects of electrical circuit malfunction.

**EXAMPLE VEHICLE SYSTEM**

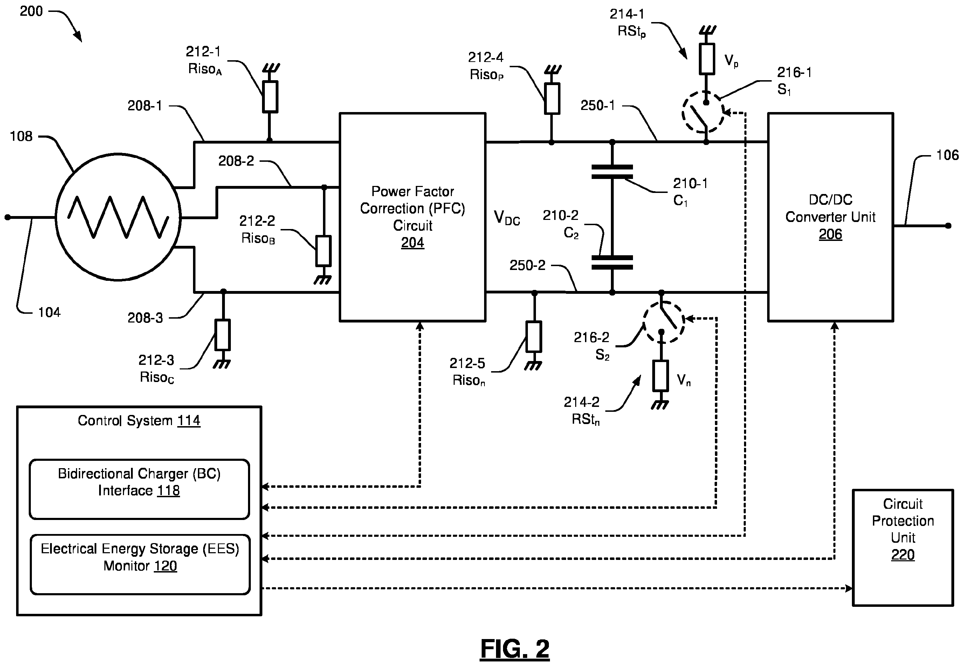

FIG. 2 is an example charging circuit 200 corresponding to various implementations of the BC (bidirectional charger) 110. The charging circuit 200 is configured to transfer energy between the EES 106 and an external energy storage, such as power source 103-1 or power source 103-2 of FIG. 1, via an electrical connection 104. In an off-loading charging mode, to satisfy energy demands of the external energy storage, the charging circuit 200 may output energy obtained from the EES 106. In an on-boarding charging mode, to replenish energy stored within the EES 106, the charging circuit 200 may receive energy from the external energy storage via the electrical connection 104 and the charge source interface 108, and transfer electric energy through the charging circuit 200 to the EES 106.

The charging circuit 200 may be coupled, directly or indirectly, to the control system 114 for controlling the power flow or energy transfer between the charging circuit 200 and the external energy storage. One side of the charging circuit 200, such as an AC side, can be coupled to the charge source interface 108, which in turn may be coupled to the external energy storage via the electrical connection 104. The charging circuit 200 includes a power factor correction (PFC) circuit 204 electrically coupled with a DC-to-DC converter unit 206 electrically connected to the EES 106.

The PFC circuit 204 controls the flow of electrical energy through the charging circuit 200. It may be coupled to the charge source interface 108 using multiple branches 208, such as branches 208-1, 208-2 and 208-3. The PFC circuit 204 may be operable in multiple switching states. Each switching state may be defined by positions of switches associated with the branches 208-1, 208-2, and 208-3 of the charging circuit 200. The PFC circuit 204 corrects the power factor of the electrical energy being rectified through modulation of the switches of the PFC circuit 204. Each switch may be switched between on and off positions.

The PFC circuit 204 may be coupled to the DC-to-DC converter unit 206 by a DC-link with a positive terminal 250-1 and a negative terminal 250-2. A first capacitor 210-1 (Ci) may be arranged in series with a second capacitor 210-2 ($C_2$) between the positive terminal 250-1 and the negative terminal 250-2. The positive terminal 250-1 and the negative terminal 250-2 are connected to respective switches Si 216-1 and $S_2$ 216-2, which may each be operable in binary states: on and off. The switches 216 may be operable to control measurement of a voltage (referred to as $V_p$) of the positive terminal 250-1 and a voltage (referred to as $V_n$) of the negative terminal 250-2. The switches 216 may collectively be referred to as a switch-controlled measurement circuit that is configured to separately measure the voltage $V_p$ of the positive terminal 250-1 when the switch $S_1$ is a closed position and the voltage $V_n$ of the negative terminal 250-2 when the switch $S_2$ is in a closed position.

The PFC circuit 204 may be configured to adjust a power factor of the charging circuit 200. The power factor of the charging circuit 200 is defined as a ratio of real power absorbed by the external energy storage to apparent power flowing in the charging circuit 200. The PFC circuit 204 ensures a power factor of the charging circuit 200 has sufficient magnitude. The PFC circuit 204 may use pulse-width modulation (PWM) control, which may include a space vector pulse width modulation (SVPWM) circuit.

Each of the branches 208-1, 208-2, and 208-3 may correspond to a respective isolation resistance $Riso_A$ 212-1, $Riso_B$ 212-2, and Risoc 212-3, which may be defined relative to ground. Each of the isolation resistances $Riso_A$ 212-1, $Riso_B$ 212-2, and Risoc 212-3 is a representation of effective resistance to ground, not an actual resistive element.

In some examples, the PFC circuit 204 may operate as a boost converter to increase a voltage of energy rectified at the branches 208. In some examples, the PFC circuit 204 may function as a buck converter to decrease the rectified voltage.

The DC-to-DC converter unit 206 may be configured to convert an input voltage received from the PFC circuit 204, and output the converted voltage to the EES 106. The DC-to-DC converter unit 206 may convert an input voltage of energy supplied from the EES 106; the converted voltage may be input to the PFC circuit 204 for output to the branches 208 for powering the external energy storage.

A processor, such as processor(s) 112 or a logic unit of BC 110 described above with respect to FIG. 1, may manage operations of the PFC circuit 204 in conjunction with the DC-to-DC converter unit 206 to manage energy transfer through the charging circuit 200. The processor may be configured to change switching states of the PFC circuit 204 for each of the branches 208-1, 208-2, and 208-3 to generate $V_{DC}$, the DC output voltage. The processor or logic unit may also operate the switches 216 to measure voltages at a resistor $RSt_p$ 214-1 located at switch Si 216-1 of the positive terminal 250-1 and a resistor $RSt_n$ 214-2 located at switch $S_2$ 216-2 of the negative terminal 250-2. Each of the the resistors $RSt_p$ 214-1 and $RSt_n$ 214-2 has a respective known resistance. The processor may be a DSP used to control access of the BC interface 118 or access measurements taken by the charging circuit 200 or components thereof, and report the same to the BC interface 118.

## IRM AND RCD

To perform isolation resistance monitoring (IRM), the processor may be configured to measure $V_{DC}$, $V_p$, and $V_n$. For example, these measurements may be made while the PFC circuit 204 is in a known operating state, which may correspond to a specific configuration of switches within the PFC circuit 204 (for example, an off or quiescent state where all the switches are open). The voltages $V_p$ and $V_n$ may be measured by closing the switches $S_1$ 216-1 and $S_2$ 216-2, respectively. Then, based on the known resistances of the resistors $RSt_p$ 214-1 and $RSt_n$ 214-2, isolation resistances $Riso_p$ 212-4 and $Riso_n$ 212-5 can be calculated as follows:

$$Riso_p = \frac{Rst_p(DC - V_n - V_p)}{Vn} \quad (1)$$

$$Riso_n = \frac{Rst_n(DC - V_n - V_p)}{Vp} \quad (2)$$

The isolation resistances $Riso_p$ 212-4 and $Riso_n$ 212-5 are equivalent (imaginary) resistances to ground seen at the positive and negative terminals 250-1 and 250-2, respectively.

Changing the states of the switches of the PFC circuit 204 changes the resistances seen at the positive terminal 250-1 and the negative terminal 250-2. For example, based on the switching states, the resistances seen are not just

Riso$_p$ 212-4 and Riso$_n$ 212-5, but may be a parallel combination with one or more of Riso$_A$ 212-1, Riso$_B$ 212-2, and Risoc 212-3. As an example, with three switches in the PFC circuit 204, each being either on or off (two states), there are $2^3 = 8$ total switching states. If the equivalent resistance seen at the positive terminal 250-1 is referred to as R$_p$ and the equivalent resistance seen at the negative terminal 250-2 is referred to as R$_n$, the resistances of an example circuit configuration for the 8 switching states may be described in Table 1:

TABLE 1

| Switching State | A | B | C | $R_p$ | $R_n$ |
|---|---|---|---|---|---|
| First | 0 | 0 | 0 | Riso$_p$ | Riso$_A$ ∥ Riso$_B$ ∥ Riso$_C$ ∥ Riso$_n$ |
| Second | 1 | 1 | 1 | Riso$_A$ ∥ Riso$_B$ ∥ Riso$_C$ ∥ Riso$_p$ | Riso$_n$ |
| Third | 1 | 0 | 0 | Riso$_A$ ∥ Riso$_p$ | Riso$_B$ ∥ Riso$_C$ ∥ Riso$_n$ |
| Fourth | 1 | 1 | 0 | Riso$_A$ ∥ Riso$_B$ ∥ Riso$_p$ | Riso$_C$ ∥ Riso$_n$ |
| Fifth | 0 | 1 | 0 | Riso$_B$ ∥ Riso$_p$ | Riso$_A$ ∥ Riso$_C$ ∥ Riso$_n$ |
| Sixth | 0 | 1 | 1 | Riso$_B$ ∥ Riso$_C$ ∥ Riso$_p$ | Riso$_A$ ∥ Riso$_n$ |
| Seventh | 0 | 0 | 1 | Riso$_C$ ∥ Riso$_p$ | Riso$_A$ ∥ Riso$_B$ ∥ Riso$_n$ |
| Eighth | 1 | 0 | 1 | Riso$_A$ ∥ Riso$_C$ ∥ Riso$_p$ | Riso$_B$ ∥ Riso$_n$ |

To perform residual current detection (RCD), the processor may be configured to, in each switching state, measure the voltages $V_p$ and $V_n$ at the resistors RSt$_p$ 214-1 and RSt$_n$ 214-2, respectively, by sequentially closing the switches $S_1$ 216-1 and $S_2$ 216-2, respectively. The values of R$_p$ and R$_n$ can then be calculated as follows:

$$R_p = \frac{Rst_p(DC - V_n - V_p)}{Vn} \qquad (3)$$

$$R_n = \frac{Rst_n(DC - V_n - V_p)}{Vp} \qquad (4)$$

Following the example shown in Table 1, consider the third switching state. The value calculated for Rp from the third switching state corresponds to the parallel combination of Riso$_A$ and Riso$_p$. Similarly, the value calculated for R$_n$ from the third switching state corresponds to the parallel combination of Riso$_B$, Risoc, and Riso$_n$. In other switching states, the values of R$_p$ and R$_n$ correspond to other parallel combinations of resistances, as shown in Table 1.

The individual values of Riso$_p$, Riso$_n$, Riso$_A$, Riso$_B$, and Riso$_C$ may be calculated using a system of equations from measurements made across the switching states and then each of the individual resistance values can be compared to a threshold. Any deviation below the respective threshold may indicate excessive residual current and trigger remedial action. Or, as described below, thresholds can be established for the values of R$_p$ and R$_n$ in different switching states. For example, a threshold for R$_p$ may be established for each switching state and a threshold for R$_n$ may be established for each switching state. Then, for each switching state, the values of R$_p$ and R$_n$ can be directly compared to the respective thresholds.

CONTROL SYSTEM

The control system 114 may receive the measured voltages from the charging circuit 200 via the BC interface 118. The BC interface 118 may trigger these measurements to be conducted at set time intervals, such as on a 10 millisecond period, while the charging circuit 200 is operating in a charging mode. For example, when the measurements are triggered, Vp and Vn may be measured for each of the states (for example, 8 states) of the PFC circuit 204. Then, the control system 114 waits until the next 10 millisecond period begins before conducting the measurements again.

The BC interface 118 may provide the calculated isolation resistances Riso$_p$ 212-4 and Riso$_n$ 212-5 to the EES monitor 120 for further processing. The EES monitor 120 may store, within a data storage, pre-programmed positive and negative thresholds for each switching state. The EES monitor 120 may, for each switching state, compare the measured resistances with the respective positive and negative thresholds in accordance with Table 1. For example, the EES monitor 120 may, for the first switching state in Table 1, (i) compare a first positive threshold stored for the first switching state with calculated positive resistance $Riso_p$ 212-4 and (ii) compare a first negative threshold stored for the first switching state with the negative resistance $Riso_n$ 212-5. Similarly, for the second switching state in Table 1, the EES monitor 120 may (i) compare a second positive threshold stored for the second switching state with the positive resistance $Riso_p$ 212-4 and (ii) compare a second negative threshold stored for the second switching state with the negative resistance $Riso_n$ 212-5.

For each of the switching states in Table 1, the EES monitor 120 may store a positive threshold and a negative threshold. For example, the EES monitor 120 may include a memory portion that is configured to store a table. For each different switching state, the table may include a first entry indicative of a positive threshold and a second entry indicative of a negative threshold. For eight switching states, the table may therefore store sixteen (16) thresholds.

The positive and negative thresholds for each of the switching states may be determined during a design and manufacturing process of the charging circuit 200. Nominal or expected resistances may be determined based on resistors located on or within the branches 208 and the resistors $RSt_p$ and $RSt_n$. The resistors may have specified resistances that may be used to determine the nominal or expected resistances at each of the branches 208 and the $RSt_p$ and $RSt_n$. In some examples, the nominal resistances may be determined empirically.

Isolation resistances may be calculated for a manufactured charging circuit 200 at imaginary positive and negative resistors at the positive and negative terminal for each switching state. For example, voltages $V_p$ and $V_n$ may be measured at the resistors $RSt_p$ 214-1 and $RSt_n$ 214-2 for each of the PFC switching state. For each switching state, an isolation resistance $Riso_p$ 212-4 and an isolation resistance $Riso_n$ 212-5 may be calculated at imaginary resistors at the positive terminal 250-1 and the negative terminal 250-2 based on the Equations 1 and 2 above.

Isolation resistances for each of the branches 208 ($Riso_A$ 212-A, $Riso_B$ 212-B, and $Riso_C$ 212-C, respectively) and the resistors $RSt_p$ 214-1 and $RSt_n$ 214-2 may be calculated based on the calculated isolation resistances $Riso_p$ 212-4 and $Riso_n$ 212-5 for each of the switching states. A total of five isolation resistances may be calculated- one per branch 208, one for resistor $RSt_p$ 214-1 and one for resistor $RSt_n$ 214-2. In some examples, the isolation resistances for each of the branches 208 and the resistors $RSt_p$ 214-1 and $RSt_n$ 214-2 may be determined based on parallel combinations of the resistors in accordance Table 1 using a mathematical formula, with for example, 16 equations (two for each switching state) with the isolation resistances $Riso_p$ 212-4 and $Riso_n$ 212-5 as known variables. If the calculated isolation resistances at the branches 208 and the resistors $RSt_p$ 214-1 and $RSt_n$ 214-2 are within a specific tolerance for their respective nominal resistances (such as those provided in the resistor specifications), lower limit for each of the fives isolation resistances may be determined.

In some examples, the lower limits may be determined as a percentage of the respective isolation resistances, such as each lower limit being twenty percent (20%) less than the respective isolation resistance. For example, five lower limits may be determined for the five isolation resistances as a percentage of the respective isolation resistances. The percentage may be determined such that an isolation resistance of less than the lower limit is dangerous for the charging circuit, the vehicle, and components thereof. In some examples, the percentage for the lower limit may be different for each isolation resistance.

Positive and negative thresholds for each switching state may them be determined based on the lower limits of the calculated five isolation resistances. Sixteen (16) thresholds may be determined with two thresholds - a positive threshold and a negative threshold for each of the eight switching states - based on 16 parallel combinations of the five lower limits for the five isolation resistances. The parallel combinations may be based on Table 1, and 16 mathematical equations may be used with the lower limits as the known variables, and the positive and negative thresholds as the unknown variables. The thresholds may be stored in a data storage of vehicle 102 or the EES monitor 120. For each switching state, the table may include a first entry indicative of the positive threshold and a second entry indicative of the negative threshold for the switching state.

Upon determining that an isolation resistance $Riso_p$ or $Riso_n$ is below its respective threshold for a switching state, the EES monitor 120 may determine that the charging operation is unsafe. For example, the drop in isolation resistance may be attributable to current leakage within the charging circuit 200. The EES monitor 120 may trigger a circuit protection unit 220 of the vehicle 102 to shut down or disable operation of the charging circuit 200 to prevent damage from electrical malfunction. circuit protection unit 220 may include a breaker (e.g., the main relay of the BC 110) to break a connection through the charging circuit 200 to de-energize the charging circuit 200.

In this way, the EES monitor 120 can be implemented in software or programmable hardware, without adding additional hardware. Existing isolation resistance measurement/monitoring circuit can be equipped with the control system 114 to protect charging circuits and include RCD functionality without needing separate circuits for each.

## PROCESS FLOWCHARTS

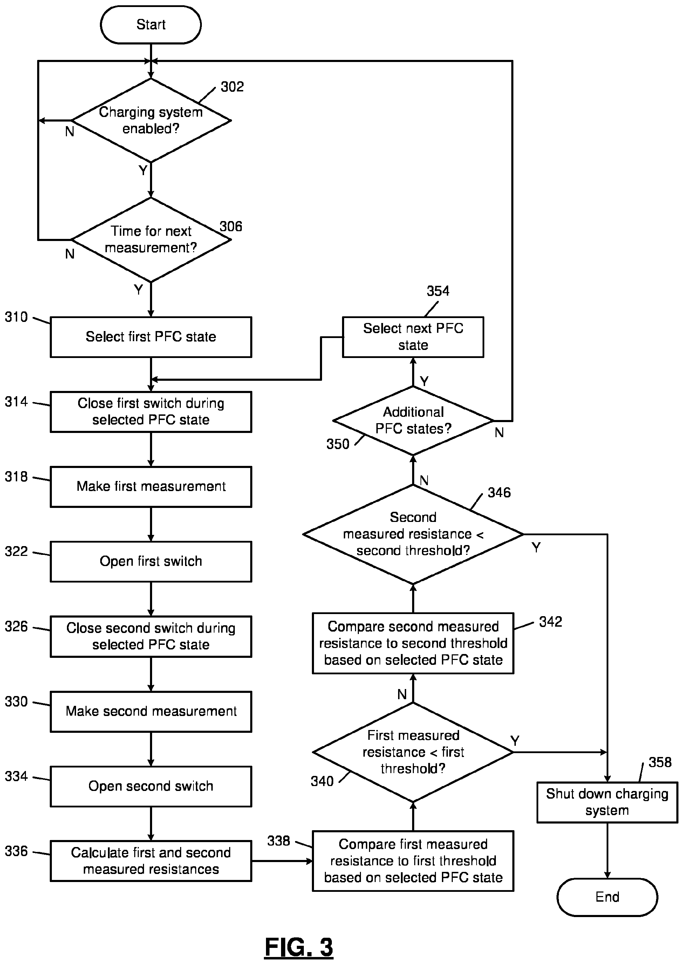

In FIG. 3, processing - for example, by a vehicle control system-begins at 302. At 302, control determines whether charging system operation is enabled. If yes, control transfers to 306; otherwise control stays at 302. For example, monitoring of a charging circuit (such as monitoring of the charging circuit 200 by the EES monitor 120) may be performed when the charging circuit is charging internal energy storage of the vehicle or is generating energy from the internal energy storage for providing power (such as to a propulsion system, to another vehicle, to a power grid, etc.).

At 306, control determines whether it is time for a measurement. If yes, control transfers to 310. Otherwise, control transfers back to 302. For example, the EES monitor 120 may periodically perform measurements in each switching state of the PFC circuit 204 to determine whether the operation of the charging circuit 200 is safe while enabled.

At 310, control selects a first PFC state. Control transfers to 314. At 314, control closes a first switch during the selected PFC state. For example, the control system 114 may close the switch $S_1$ 216-1 of the positive terminal 250-1 while the charger is in the selected PFC state. Control transfers to 318.

At 318, control makes a first measurement. For example, the control system 114 may measure a positive voltage $V_p$ at the positive terminal 250-1 during the selected switching state. Control then moves to 322. At 322, control opens the first switch. For example, the control system 114 may open the switch $S_1$ 216-1 positive terminal 250-1 of the vehicle charger. Control transfers to 326.

At 326, control closes a second switch during the selected PFC state. For example, the control system 114 may close the switch $S_2$ 216-2 of the negative terminal 250-2 while the charger is in the selected switching state. Control transfers to 330. At 330, control makes a second measurement. For example, the control system 114 may measure the negative voltage $V_n$ at the negative terminal during the selected PFC state. Control then moves to 434. At 334, control opens the second switch. For example, the control system 114 may open the switch $S_2$ 216-2 of the negative terminal 250-2. Control transfers to 336.

At 336, control calculates first and second measured resistances. For example, the control system 114 may calculate the positive isolation resistance $Riso_p$ 212-4 at the positive terminal 250-1 based on the positive voltage $V_p$, the negative voltage $V_n$, and the known resistance $RSt_p$ 214-1. Similarly, the control system 114 may measure the negative isolation resistance $Riso_n$ 212-5 at the negative terminal 250-2 based on the positive voltage $V_p$, the negative voltage $V_n$, and the known resistance $RSt_n$ 214-2. Control transfers to 338.

At 338, control compares the first measured resistance to a first threshold based on the selected PFC state. For example, the EES monitor 120 may compare the positive isolation resistance $Riso_p$ 212-4 at the positive terminal 250-1 with the pre-programmed positive threshold for the selected switching state as stored within a datastore. Control transfers to 340.

At 340, control determines whether the first measured resistance below the first threshold. For example, the control system 114 may determine whether the positive isolation resistance $Riso_p$ 212-4 at the positive terminal 250-1 is lower than the positive threshold. If yes, control moves to 358. Otherwise, control transfers to 342.

At 342, control compares the second measured resistance to a second threshold based on the selected PFC state. For example, the EES monitor 120 may compare the negative isolation resistance $Riso_n$ 212-5 at the negative terminal 250-2 with the pre-programmed negative threshold for the selected PFC state as stored within a datastore. Control then moves to 346.

At 346, control determines whether the second measured resistance falls below the second threshold. For example, the control system 114 may determine whether the negative isolation resistance $Riso_n$ 212-5 at the negative terminal is lower than the negative threshold.. If yes, control transfers to 358. Otherwise, control transfers to 350.

At 350, control determines whether there are additional PFC states to consider. If yes, control transfers to 354. Otherwise, control transfers back to 302. For example, if no other switching states are remaining, the control system 114 may determine that the operation of the vehicle charger is safe. At 354, control selects next PFC state. For example, the control system 114 may perform measurements for each of the eight switching states per Table 1. Control transfers back to 314.

At 358, charging is shut down. For example, the control system 114 may trigger the circuit protection unit 220 to disable the charging circuit 200. The circuit protection unit 220 may shut down or disable the charging operation to protect the vehicle 102, the electrical connection 104, the power source 103-1 or 103-2, and/or components thereof. Control ends at 358.

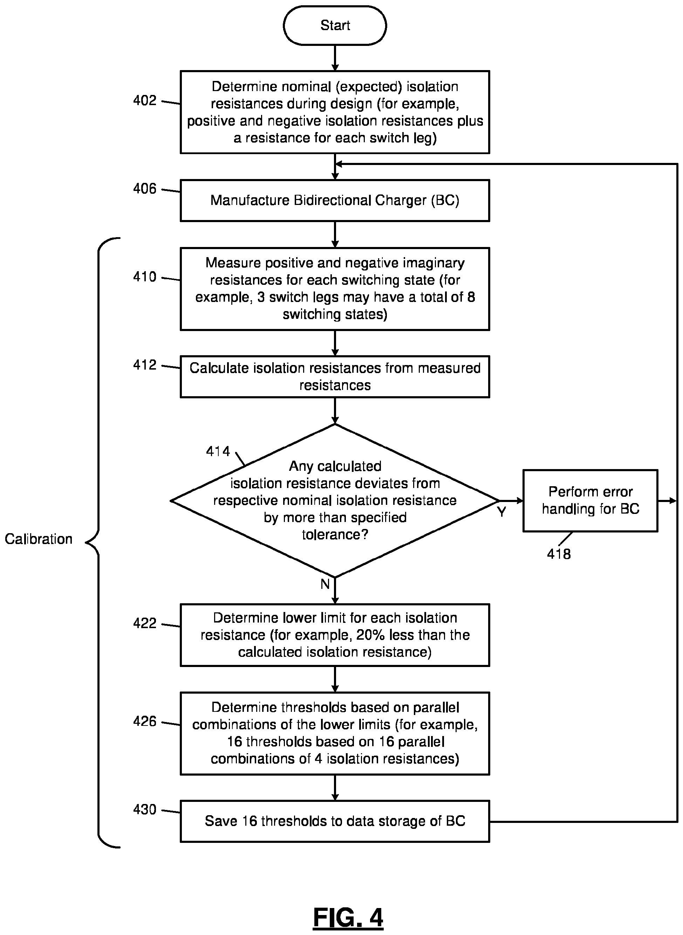

FIG. 4 demonstrates a process for determining thresholds. At 402, nominal (expected) isolation resistances are determined during design. For example, positive isolation resistance at resistor $RSt_p$ 214-1, negative isolation resistance at resistor $RSt_n$ 214-2, and a resistance for each switch leg (branches 208) of the PFC circuit 204 may be determined based on a schematic of the charging circuit 200. In some examples, the nominal resistances may be determined empirically. The process transfers to 406.

At 406, a bi-directional charger (BC) is manufactured. For example, the BC 110 may be manufactured based on the schematic of the charging circuit 200. The process transfers to 410. At 410, positive and negative imaginary resistances for each switching state are measured. For example, EES monitor 120 may measure the imaginary positive resistance $Riso_p$ 212-4 and the imaginary negative resistance $Riso_n$ 212-5 for each PFC switching state. For example, for three switch legs (such as the branches 208), measurements may be done for eight switching states as described in Table 1. The process transfers to 414.

At 412, isolation resistances are calculated from the measured resistances. For example, the EES monitor 120 may calculate the isolation resistances $Riso_A$ $Riso_B$, and Risoc for the branches 208, and the isolation resistances for resistors $RSt_p$ and $RSt_n$ based on the measured imaginary positive and negative resistances at each switching state. The isolation resistances may be calculated based on parallel combination of resistances during each PFC switching state. The process transfers to 414.

At 414, it is determined whether any calculated isolation resistances deviate from corresponding nominal isolation resistances by more than a specified tolerance. For example, EES monitor 120 may determine whether any of the calculated isolation resistances are lower than the nominal isolation resistances by an amount over a pre-determined safety tolerance of the respective resistors. If yes, the process transfers to 418; otherwise, process transfers to 422.

At 418, error handling may be performed for the BC. For example, the manufactured BC 110 may be inspected to determine whether the manufactured BC meets the schematic of the charging circuit 200. The process transfers back to 406.

At 422, a lower limit for each isolation resistance is determined. For example, the lower limit may be determined such that an isolation resistance at the corresponding resistor lower than the limit may indicate an unsafe operation of the BC 110. In one example, the lower limit for one of the calculated isolation resistances may be twenty percent (20%) less than the corresponding calculated isolation resistance. In this way, a lower limit for an isolation resistance for each of the switch legs and the positive and negative resistances may be determined. The process transfers to 426.

At 426, positive and negative thresholds for each of the switching states may be determined based on parallel combination of the lower limits. For example, a positive threshold and a negative threshold for a switching state may be determined based on the parallel combinations of the lower limits for the isolation resistances based on Table 1. In an example with three switch legs (branches), a positive and a negative threshold for each of the eight switching states may be determined. The process transfers to 430.

At 430, the sixteen thresholds are saved in a data storage of BC. For example, the BC 110 may include a data storage to store the sixteen threshold for the eight switching states. The process returns to 406.

During operation of the BC 110, a measured positive resistance $Riso_p$ 212-4 at the positive terminal 250-1 lower than the positive threshold for that switching state may indicate an unsafe operation of BC 110 and lead the EES monitor 120 to trigger the circuit protection unit 220 to cease the operation of the BC 110. Similarly, a measured negative resistance $Riso_n$ 212-5 at the negative terminal 250-2 of less than the negative threshold may indicate an unsafe operation of BC 110 and lead the EES monitor 120 to trigger the circuit protection unit 220 to cease the operation of the BC 110.

CONCLUSION

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the scope of the disclosure as defined by the following claims.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Similarly, one or more instructions stored in a non-transitory computer-readable medium may be executed in a different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship encompasses a direct relationship where no other intervening elements are present between the first and second elements as well as an indirect relationship where one or more intervening elements are present between the first and second elements.

As noted below, the term "set" generally means a grouping of one or more elements. However, in various implementations a "set" may, in certain circumstances, be the empty set (in other words, the set has zero elements in those circumstances). As an example, a set of search results resulting from a query may, depending on the query, be the empty set. In contexts where it is not otherwise clear, the term "non-empty set" can be used to explicitly denote exclusion of the empty set - that is, a non-empty set will always have one or more elements.

A "subset" of a first set generally includes some of the elements of the first set. In various implementations, a subset of the first set is not necessarily a proper subset: in certain circumstances, the subset may be coextensive with (equal to) the first set (in other words, the subset may include the same elements as the first set). In contexts where it is not otherwise clear, the term "proper subset" can be used to explicitly denote that a subset of the first set must exclude at least one of the elements of the first set. Further, in various implementations, the term "subset" does not necessarily exclude the empty set. As an example, consider a set of candidates that was selected based on first criteria and a subset of the set of candidates that was selected based on second criteria; if no elements of the set of candidates met the second criteria, the subset may be the empty set. In contexts where it is not otherwise clear, the term "non-empty subset" can be used to explicitly denote exclusion of the empty set.

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" can be replaced with the term "controller" or the term "circuit." In this application, the term "controller" can be replaced with the term "module." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); processor hardware (shared, dedicated, or group) that executes code; memory hardware (shared, dedicated, or group) that is coupled with the processor hardware and stores code executed by the processor hardware; other suitable hardware components that provide the described functionality; or a combination of some or all of the above, such as in a system-on-chip.

The module may include one or more interface circuits. In some examples, the interface circuit(s) may implement wired or wireless interfaces that connect to a local area network (LAN) or a wireless personal area network (WPAN). Examples of a LAN are Institute of Electrical and Electronics Engineers (IEEE) Standard 802.11-2020 (also known as the WIFI wireless networking standard) and IEEE Standard 802.3-2018 (also known as the ETHERNET wired networking standard). Examples of a WPAN are IEEE Standard 802.15.4 (including the ZIGBEE standard from the ZigBee Alliance) and, from the Bluetooth Special Interest Group (SIG), the BLUETOOTH wireless networking standard (including Core Specification versions 3.0, 4.0, 4.1, 4.2, 5.0, and 5.1 from the Bluetooth SIG).

The module may communicate with other modules using the interface circuit(s). Although the module may be depicted in the present disclosure as logically communicating directly with other modules, in various implementations the module may actually communicate via a communications system. The communications system includes physical and/or virtual networking equipment such as hubs, switches, routers, and gateways. In some implementations, the communications system connects to or traverses a wide area network (WAN) such as the Internet. For example, the communications system may include multiple LANs connected to each other over the Internet or point-to-point leased lines using technologies including Multiprotocol Label Switching (MPLS) and virtual private networks (VPNs).

In various implementations, the functionality of the module may be distributed among multiple modules that are connected via the communications system. For example, multiple modules may implement the same functionality distributed by a load balancing system. In a further example, the functionality of the module may be split between a server (also known as remote, or cloud) module and a client (or, user) module. For example, the client module may include a native or web application executing on a client device and in network communication with the server module.

Some or all hardware features of a module may be defined using a language for hardware description, such as IEEE Standard 1364-2005 (commonly called "Verilog") and IEEE Standard 1076-2008 (commonly called "VHDL"). The hardware description language may be used to manufacture and/or program a hardware circuit. In some implementations, some or all features of a module may be defined by a language, such as IEEE 1666-2005 (commonly called "SystemC"), that encompasses both code, as described below, and hardware description.

The term code, as used above, may include software, firmware, and/or microcode, and may refer to programs, routines, functions, classes, data structures, and/or objects. Shared processor hardware encompasses a single microprocessor that executes some or all code from multiple modules. Group processor hardware encompasses a microprocessor that, in combination with additional microprocessors, executes some or all code from one or more modules. References to multiple microprocessors encompass multiple microprocessors on discrete dies, multiple microprocessors on a single die, multiple cores of a single microprocessor, multiple threads of a single microprocessor, or a combination of the above.

The memory hardware may also store data together with or separate from the code. Shared memory hardware encompasses a single memory device that stores some or all code from multiple modules. One example of shared memory hardware may be level 1 cache on or near a microprocessor die, which may store code from multiple modules. Another example of shared memory hardware may be persistent storage, such as a solid state drive (SSD) or magnetic hard disk drive (HDD), which may store code from multiple modules. Group memory hardware encompasses a memory device that, in combination with other memory devices, stores some or all code from one or more modules. One example of group memory hardware is a storage area network (SAN), which may store code of a particular module across multiple physical devices. Another example of group memory hardware is random access memory of each of a set of servers that, in combination, store code of a particular module. The term memory hardware is a subset of the term computer-readable medium.

The apparatuses and methods described in this application may be partially or fully implemented by a special-purpose computer created by configuring a general-purpose computer to execute one or more particular functions embodied in computer programs. Such apparatuses and methods may be described as computerized or computer-implemented apparatuses and methods. The functional blocks and flowchart elements described above serve as software specifications, which can be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special-purpose computer, device drivers that interact with particular devices of the special-purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java®, Fortran, Perl, Pascal, Curl, OCaml, JavaScript®, HTML5 (Hypertext Markup Language 5th revision), Ada, ASP (Active Server Pages), PHP (PHP: Hypertext Preprocessor), Scala, Eiffel, Smalltalk, Erlang, Ruby, Flash®, Visual Basic®, Lua, MATLAB, SIMULINK, and Python®.

The term non-transitory computer-readable medium does not encompass transitory electrical or electromagnetic signals propagating through a medium (such as on a carrier wave). Non-limiting examples of a non-transitory computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The term "set" generally means a grouping of one or more elements. The elements of a set do not necessarily need to have any characteristics in common or otherwise belong together. The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR.

In the following, further preferred embodiments are described to facilitate understanding:

Embodiment 1. A control system for controlling a vehicle charger including a power factor correction (PFC) circuit, the control system comprising:

a resistance measuring circuit configured to make first resistance measurements at a positive DC terminal of the PFC circuit and second resistance measurements at a negative DC terminal of the PFC circuit; and

a controller configured to, in response to the PFC circuit being in a selected switching state:

compare one of the first resistance measurements to a positive threshold, wherein:

the one of the first resistance measurements is made while the PFC circuit is in the selected switching state, and
the positive threshold is based on a first parallel combination of one or more resistances corresponding to the selected switching state of the PFC circuit; and

in response to the one of the first resistance measurements being less than the positive threshold, disable operation of the vehicle charger.

Embodiment 2. The control system of Embodiment 1 wherein the controller is configured to, in response to the PFC circuit being in the selected switching state:

compare one of the second resistance measurements to a negative threshold, wherein:

the one of the second resistance measurements is made while the PFC circuit is in the selected switching state, and
the negative threshold is based on a second parallel combination of one or more resistances corresponding to the selected switching state of the PFC circuit; and

in response to the one of the second resistance measurements being less than the negative threshold, disable operation of the vehicle charger.

Embodiment 3. The control system of Embodiment 1 or 2 wherein the resistance measuring circuit is configured to:

make voltage measurements of the PFC circuit; and
calculate the first resistance measurements and the second resistance measurements based on the voltage measurements.

Embodiment 4. The control system of Embodiment 3 wherein:

the voltage measurements include first voltage measurements at the positive DC terminal and second voltage measurements at the negative DC terminal;
each of the first resistance measurements is calculated based on the one of first voltage measurements and one of the second voltage measurements; and
each of the second resistance measurements is calculated based on one of the first voltage measurements and one of the second voltage measurements.

Embodiment 5. The control system of any of the preceding Embodiments wherein:

the PFC circuit includes three branches corresponding one-to-one with three equivalent resistances, and
the positive and negative thresholds are determined based on parallel combinations of one or more of the three equivalent resistances.

Embodiment 6. The control system of Embodiment 5 wherein:

a set of equivalent resistances includes a fourth equivalent resistance, a fifth equivalent resistance, and the three equivalent resistances,
the fourth equivalent resistance corresponds to the positive DC terminal,
the fifth equivalent resistance corresponds to the negative DC terminal, and
the positive and negative thresholds are determined based on parallel combinations of one or more of the set of equivalent resistances.

Embodiment 7. The control system of any of the preceding Embodiments wherein the PFC circuit includes eight switching states, each switching state associated with a corresponding threshold for the positive DC terminal and a corresponding threshold for the negative DC terminal.

Embodiment 8. The control system of Embodiment 7 further comprising a datastore storing the corresponding thresholds for each of the eight switching states.

Embodiment 9. The control system of any of the preceding Embodiments wherein the resistance measuring circuit includes:

a first resistance measuring circuit configured to measure a first resistance at a first DC terminal of the PFC circuit; and
a second resistance measuring circuit configured to measure a second resistance at a second DC terminal of the PFC circuit.

Embodiment 10. The control system of Embodiment 9 wherein:

the first resistance measuring circuit includes:

a first resistor with a known first resistance, and
a first switch that selectively connects the first resistor to the positive DC terminal; and

the second resistance measuring circuit includes:

a second resistor with a known second resistance, and
a second switch that selectively connects the second resistor to the negative DC terminal.

Embodiment 11. The control system of any of the preceding Embodiments wherein the vehicle charger is a bi-directional charger configured to on-board energy from and off-board energy to an external energy storage.

Embodiment 12. The control system of any of the preceding Embodiments wherein the resistance measuring circuit is configured to make the first resistance measurements and the second resistance measurements in response to the vehicle charger being in a charging mode.

Embodiment 13. The control system of any of the preceding Embodiments wherein the positive threshold is a percentage of a first expected resistance that is calculated based on the first parallel combination of the one or more resistances corresponding to the selected switching state.

Embodiment 14. The control system of any of the preceding Embodiments wherein the first resistance measurements are isolation resistances.

Embodiment 15. The control system of any of the preceding Embodiments wherein the controller is configured to disable the operation of the vehicle charger by triggering a protection circuit to de-energize the vehicle charger.

Embodiment 16. A method for controlling a vehicle charger having a power factor correction (PFC) circuit, the method comprising:

in response to the PFC circuit being in a selected switching state, making a first resistance measurement at a positive DC terminal of the PFC circuit and a second resistance measurement at a negative DC terminal of the PFC circuit, wherein the first resistance measurement and the second resistance measurement are made while the PFC circuit is in the selected switching state;
comparing the first resistance measurement to a positive threshold, wherein the positive threshold is based on a first parallel combination of one or more resistances corresponding to the selected switching state of the PFC circuit; and
in response to the first resistance measurement being less than the positive threshold, disabling operation of the vehicle charger.

Embodiment 17. The method of Embodiment 16, the method further comprising:

comparing the second resistance measurement to a negative threshold, wherein the negative threshold is based on a second parallel combination of one or more resistances corresponding to the selected switching state of the PFC circuit; and
in response to the second resistance measurement being less than the negative threshold, disabling the operation of the vehicle charger.

Embodiment 18. The method of Embodiment 16 or 17 wherein:

the PFC circuit includes three branches corresponding one-to-one with three equivalent resistances; and
the positive and negative thresholds are determined based on parallel combinations of the three equivalent resistances.

Embodiment 19. A non-transitory computer-readable medium comprising instructions including:

in response to having a power factor correction (PFC) circuit of a vehicle charger being in a selected switching state, making a first resistance measurement at a positive DC terminal of the PFC circuit and a second resistance measurement at a negative DC terminal of the PFC circuit, wherein the first resistance measurement and the second resistance measurement are made while the PFC circuit is in the selected switching state;
comparing the first resistance measurement to a positive threshold, wherein the positive threshold is based on a first parallel combination of one or more resistances corresponding to the selected switching state of the PFC circuit; and
in response to the first resistance measurement being less than the positive threshold, disabling operation of the vehicle charger.

Embodiment 20. The non-transitory computer-readable medium of Embodiment 19 wherein the positive threshold is a percentage of a first expected resistance that is calculated based on the first parallel combination of the one or more resistances corresponding to the selected switching state.

**Claims**

1. A control system (114) for controlling a vehicle charger including a power factor correction (PFC) circuit (204), the control system comprising:

   a resistance measuring circuit configured to make first resistance measurements at a positive DC terminal of the PFC circuit (204) and second resistance measurements at a negative DC terminal of the PFC circuit; and
   a controller configured to, in response to the PFC circuit (204) being in a selected switching state:

      compare one of the first resistance measurements to a positive threshold, wherein:

         the one of the first resistance measurements is made while the PFC circuit (204) is in the selected switching state, and
         the positive threshold is based on a first parallel combination of one or more resistances corresponding to the selected switching state of the PFC circuit (204); and

      in response to the one of the first resistance measurements being less than the positive threshold, disable operation of the vehicle charger.

2. The control system (114) of claim 1 wherein the controller is configured to, in response to the PFC circuit (204) being in the selected switching state:

      compare one of the second resistance measurements to a negative threshold, wherein:

         the one of the second resistance measurements is made while the PFC circuit (204) is in the selected switching state, and
         the negative threshold is based on a second parallel combination of one or more resistances corresponding to the selected switching state of the PFC circuit; and

      in response to the one of the second resistance measurements being less than the negative threshold, disable operation of the vehicle charger.

3. The control system (114) of claim 1 or 2 wherein the resistance measuring circuit is configured to:

      make voltage measurements of the PFC circuit (204); and
      calculate the first resistance measurements and the second resistance measurements based on the voltage measurements,

      wherein preferably:

         the voltage measurements include first voltage measurements at the positive DC terminal and second voltage measurements at the negative DC terminal;
         each of the first resistance measurements is calculated based on the one of first voltage measurements and one of the second voltage measurements; and
each of the second resistance measurements is calculated based on one of the first voltage measurements and one of the second voltage measurements.

4. The control system (114) of any one of the preceding claims wherein:

the PFC circuit (204) includes three branches (208-1, 208-2, 208-3) corresponding one-to-one with three equivalent resistances, and
the positive and negative thresholds are determined based on parallel combinations of one or more of the three equivalent resistances,

wherein preferably:

a set of equivalent resistances includes a fourth equivalent resistance, a fifth equivalent resistance, and the three equivalent resistances,
the fourth equivalent resistance corresponds to the positive DC terminal,
the fifth equivalent resistance corresponds to the negative DC terminal, and
the positive and negative thresholds are determined based on parallel combinations of one or more of the set of equivalent resistances.

5. The control system (114) of any one of the preceding claims wherein the PFC circuit (204) includes eight switching states, each switching state associated with a corresponding threshold for the positive DC terminal and a corresponding threshold for the negative DC terminal,
preferably further comprising a datastore storing the corresponding thresholds for each of the eight switching states.

6. The control system (114) of any one of the preceding claims wherein the resistance measuring circuit includes:

a first resistance measuring circuit configured to measure a first resistance at a first DC terminal of the PFC circuit (204); and
a second resistance measuring circuit configured to measure a second resistance at a second DC terminal of the PFC circuit,

wherein preferably:

the first resistance measuring circuit includes:

a first resistor with a known first resistance, and
a first switch that selectively connects the first resistor to the positive DC terminal; and

the second resistance measuring circuit includes:

a second resistor with a known second resistance, and
a second switch that selectively connects the second resistor to the negative DC terminal.

7. The control system (114) of any one of the preceding claims wherein the vehicle charger is a bi-directional charger configured to on-board energy from and off-board energy to an external energy storage.

8. The control system (114) of any one of the preceding claims wherein the resistance measuring circuit is configured to make the first resistance measurements and the second resistance measurements in response to the vehicle charger being in a charging mode.

9. The control system (114) of any one of the preceding claims wherein the positive threshold is a percentage of a first expected resistance that is calculated based on the first parallel combination of the one or more resistances corresponding to the selected switching state.

10. The control system (114) of any one of the preceding claims wherein the first resistance measurements are isolation resistances.

**11.** The control system (114) of any one of the preceding claims wherein the controller is configured to disable the operation of the vehicle charger by triggering a protection circuit to de-energize the vehicle charger.

**12.** A method for controlling a vehicle charger having a power factor correction (PFC) circuit (114), the method comprising:

in response to the PFC circuit (114) being in a selected switching state, making a first resistance measurement at a positive DC terminal of the PFC circuit (114) and a second resistance measurement at a negative DC terminal of the PFC circuit (114), wherein the first resistance measurement and the second resistance measurement are made while the PFC circuit (114) is in the selected switching state;

comparing the first resistance measurement to a positive threshold, wherein the positive threshold is based on a first parallel combination of one or more resistances corresponding to the selected switching state of the PFC circuit (114); and

in response to the first resistance measurement being less than the positive threshold, disabling operation of the vehicle charger.

**13.** The method of claim 12, the method further comprising:

comparing the second resistance measurement to a negative threshold, wherein the negative threshold is based on a second parallel combination of one or more resistances corresponding to the selected switching state of the PFC circuit (114); and

in response to the second resistance measurement being less than the negative threshold, disabling the operation of the vehicle charger.

**14.** The method of claim 12 or 13 wherein:

the PFC circuit (114) includes three branches (208-1, 208-2, 208-3) corresponding one-to-one with three equivalent resistances; and

the positive and negative thresholds are determined based on parallel combinations of the three equivalent resistances.

**15.** A non-transitory computer-readable medium comprising instructions including:

in response to having a power factor correction (PFC) circuit (114) of a vehicle charger being in a selected switching state, making a first resistance measurement at a positive DC terminal of the PFC circuit (114) and a second resistance measurement at a negative DC terminal of the PFC circuit (114), wherein the first resistance measurement and the second resistance measurement are made while the PFC circuit (114) is in the selected switching state;

comparing the first resistance measurement to a positive threshold, wherein the positive threshold is based on a first parallel combination of one or more resistances corresponding to the selected switching state of the PFC circuit (114); and

in response to the first resistance measurement being less than the positive threshold, disabling operation of the vehicle charger,

wherein preferably the positive threshold is a percentage of a first expected resistance that is calculated based on the first parallel combination of the one or more resistances corresponding to the selected switching state.

**FIG. 1**

Electric Vehicle
Parking
Only

Charge Station

103-2

104

103-1

102

104

**Vehicle**
**102**

Electrical Energy Storage (EES)
**106**

Bidirectional Charger (BC)
**110**

Processor(s)
**112**

Network
**116**

Control System
**114**

Bidirectional Charger (BC)
Interface **118**

Charge Source Interface
**108**

Electrical Energy Storage (EES)
Monitor **120**

Residual Current Detection
(RCD) **122**

Isolation Resistance Monitoring
(IRM) **124**

104

**FIG. 2**

EP 4 458 603 A1

Start

302
Charging system enabled?

N

Y

306
Time for next measurement?

N

Y

310 — Select first PFC state

314 — Close first switch during selected PFC state

318 — Make first measurement

322 — Open first switch

326 — Close second switch during selected PFC state

330 — Make second measurement

334 — Open second switch

336 — Calculate first and second measured resistances

338 — Compare first measured resistance to first threshold based on selected PFC state

340 — First measured resistance < first threshold?

N

Y

342 — Compare second measured resistance to second threshold based on selected PFC state

346 — Second measured resistance < second threshold?

Y

N

350 — Additional PFC states?

N

Y

354 — Select next PFC state

358 — Shut down charging system

End

**FIG. 3**

Start

402 — Determine nominal (expected) isolation resistances during design (for example, positive and negative isolation resistances plus a resistance for each switch leg)

406 — Manufacture Bidirectional Charger (BC)

410 — Measure positive and negative imaginary resistances for each switching state (for example, 3 switch legs may have a total of 8 switching states)

412 — Calculate isolation resistances from measured resistances

414 — Any calculated isolation resistance deviates from respective nominal isolation resistance by more than specified tolerance?

Y — Perform error handling for BC
418

N

422 — Determine lower limit for each isolation resistance (for example, 20% less than the calculated isolation resistance)

426 — Determine thresholds based on parallel combinations of the lower limits (for example, 16 thresholds based on 16 parallel combinations of 4 isolation resistances)

430 — Save 16 thresholds to data storage of BC

Calibration

**FIG. 4**

Europäisches
Patentamt

European
Patent Office

Office européen
des brevets

# EUROPEAN SEARCH REPORT

**Application Number**

EP 24 17 3034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2021 003844 A1 (MERCEDES BENZ GROUP AG [DE]) 2 February 2023 (2023-02-02) * paragraphs [0002], [0021], [0030], [0031]; figures 1,2 * | 1-15 | INV. B60L3/00 B60L53/22 B60L53/57 B60L55/00 |
| A | CN 108 539 835 B (GOSPOWER DIGITAL TECH SHENZHEN CO LTD) 7 June 2022 (2022-06-07) * the whole document * | 1-15 | |
| A | CN 109 599 923 A (ZHUHAI YUNCHONG TECH CO LTD) 9 April 2019 (2019-04-09) * the whole document * | 1-15 | |

**TECHNICAL FIELDS SEARCHED (IPC)**

B60L

The present search report has been drawn up for all claims

| Place of search | Date of completion of the search | Examiner |
|---|---|---|
| The Hague | 30 September 2024 | Bronski, Bartlomiej |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 17 3034

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2024

| Patent document cited in search report | Publication date | Patent family member(s) | Publication date |
|---|---|---|---|
| DE 102021003844 A1 | 02-02-2023 | CN 117730016 A<br>DE 102021003844 A1<br>EP 4377123 A1<br>JP 2024528862 A<br>KR 20240025662 A<br>WO 2023006751 A1 | 19-03-2024<br>02-02-2023<br>05-06-2024<br>01-08-2024<br>27-02-2024<br>02-02-2023 |
| CN 108539835 B | 07-06-2022 | NONE | |
| CN 109599923 A | 09-04-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63500424
- US 63510350 B